# EUROPÄISCHE PATENTSCHRIFT

(11) **EP 3 424 761 B1**
(45) Veröffentlichungstag und Bekanntmachung des Hinweises auf die Patenterteilung: **05.08.2020**
(21) Anmeldenummer: 18178693.0
(22) Anmeldetag: 20.06.2018
(51) Int. Cl.: B60H 1/22, F24H 3/04, F24H 9/00

(54) **TRÄGERANORDNUNG**
SUPPORT ASSEMBLY
SYSTÈME SUPPORT

(30) Priorität: 03.07.2017 DE 102017114762
(43) Veröffentlichungstag der Anmeldung: 09.01.2019
(73) Patentinhaber: Eberspächer Climate Control Systems GmbH & Co. KG, 73730 Esslingen (DE)
(72) Erfinder: Findeis, Thorsten, 73095 Albershausen (DE); Jensen, Hans, 73265 Dettingen (DE); Grotstollen, Uwe, 73734 Esslingen (DE); Eger, Johannes, 73730 Esslingen (DE)
(74) Vertreter: Ruttensperger Lachnit Trossin Gomoll

(56) Entgegenhaltungen:
- EP-A2- 1 213 547
- EP-A2- 1 270 288
- DE-A1-102007 022 720

## Beschreibung

Die vorliegende Erfindung betrifft eine Trägeranordnung, vermittels welcher ein vorzugsweise brennstoffbetriebenes Heizgerät an einem Fahrzeug angebracht werden kann.

Zur Integration von beispielsweise als Standheizungen oder/und Zuheizer einsetzbaren Heizgeräten in Fahrzeuge ist es bekannt, im Allgemeinen aus Blechmaterial gebogene Trägeranordnungen einzusetzen. Diese umfassen einen Anbringungsbereich, mit welchen diese beispielsweise durch Verschraubung an einem Fahrzeug angebracht werden können. In einem Tragebereich derartiger Trägeranordnungen kann ein Heizgerät beispielsweise im Bereich eines Heizgerätegehäuses desselben z.B. durch Verschraubung an der Trägeranordnung angebracht werden. Dabei ist es erforderlich, dass sowohl bei der Positionierung der Trägeranordnung bezüglich des Fahrzeugs, als auch bei der Positionierung des Heizgeräts bezüglich der Trägeranordnung die verschiedenen an einem derartigen Heizgerät ausgebildeten Anschlüsse, beispielsweise zur Zufuhr von Verbrennungsluft, zur Zufuhr bzw. Abfuhr eines Wärmeträgermediums zu bzw. von einem Wärmetauscherbereich des Heizgeräts und zur Abfuhr von in einem Brennerbereich des Heizgeräts entstehenden Verbrennungsabgasen, frei liegen, um diese Medien führenden Leitungen anschließen zu können.

Aus der EP 1 213 547 A2 ist eine mit zwei Gehäuseteilen aufgebaute Trägeranordnung für ein brennstoffbetriebenes Fahrzeugheizgerät bekannt. Bei dieser bekannten Trägeranordnung führt ein Verbrennungsluftleitungsbereich von einem an einem der Gehäuseteile vorgesehenen Verbrennungsluft-Anschlussbereich zu einem Verbrennungslufteinlass des Fahrzeugheizgeräts. Ein in dem anderen der Gehäuseteile vorgesehener Wärmeträgermediumleitungsbereich umfasst einen von einem an dem anderen der Gehäuseteile vorgesehenen Wärmeträgermedium-Anschlussbereich über eine Wärmeträgermediumpumpe zu einem ersten Wärmetauscherbereich-Anschlussbereich eines in dem anderen der Gehäuseteile vorgesehenen Wärmetauscherbereichs führenden Leitungsbereich. Ein weiterer in dem anderen der Gehäuseteile vorgesehener Leitungsbereich führt von einem zweiten Wärmetauscherbereich-Anschlussbereich des Wärmetauscherbereichs zu einem weiteren an dem anderen der Gehäuseteile vorgesehenen Wärmeträgermedium-Anschlussbereich. An die beiden an dem anderen der Gehäuseteile vorgesehenen Wärmeträgermedium-Anschlussbereiche kann ein in einem Fahrzeug vorgesehener Wärmeträgermediumkreislauf angeschlossen werden.

Es ist die Aufgabe der vorliegenden Erfindung, eine Trägeranordnung zur Anbringung eines vorzugsweise brennstoffbetriebenen Heizgeräts an einem Fahrzeug vorzusehen, welche bei stabiler Anbringung eine einfach und zuverlässig herstellbare Anbindung des Heizgeräts an verschiedene Medien von oder zu diesem führende Leitungen ermöglicht.

Erfindungsgemäß wird diese Aufgabe gelöst durch eine Trägeranordnung zur Anbringung eines vorzugsweise brennstoffbetriebenes Heizgerätes an einem Fahrzeug, umfassend einen Anbringungsbereich zur Anbringung der Trägeranordnung an einem Fahrzeug und einen Tragebereich zur Anbringung eines Heizgerätes an der Trägeranordnung, ferner umfassend:
- einen Verbrennungsluftleitungsbereich zum Leiten von Verbrennungsluft zu einem Verbrennungslufteinlass eines Heizgerätes,
   und
- einen Wärmeträgermediumleitungsbereich zum Leiten von in einem Wärmeträgermediumkreislauf eines Fahrzeugs strömendem Wärmeträgermedium durch die Trägeranordnung hindurch und zu oder von einem Wärmetauscherbereich des Fahrzeugheizgeräts.

Dabei umfasst der Wärmeträgermediumleitungsbereich:
- einen ersten Leitungsbereich mit einem an den Wärmeträgermediumkreislauf anzuschließenden ersten Wärmeträgermediumkreislauf-Anschlussbereich und einem an ein Schaltventil anzuschließenden ersten Schaltventil-Anschlussbereich,
   und
- einen zweiten Leitungsbereich mit einem an den Wärmeträgermediumkreislauf anzuschließenden zweiten Wärmeträgermediumkreislauf-Anschlussbereich und einem an das Schaltventil anzuschließenden zweiten Schaltventil-Anschlussbereich,
   und
- einen dritten Leitungsbereich mit einem an den Wärmeträgermediumkreislauf anzuschließenden dritten Wärmeträgermediumkreislauf-Anschlussbereich und einem an das Schaltventil anzuschließenden dritten Schaltventil-Anschlussbereich,
   und
- einen vierten Leitungsbereich mit einem an den Wärmetauscherbereich anzuschließenden ersten Wärmetauscherbereich-Anschlussbereich und einem an das Schaltventil anzuschließenden vierten Schaltventil-Anschlussbereich,
   und
- einen fünften Leitungsbereich mit einem an den Wärmetauscherbereich anzuschließenden zweiten Wärmetauscherbereich-Anschlussbereich und einem an den Wärmeträgermediumkreislauf anzuschließenden vierten Wärmeträgermediumkreislauf-Anschlussbereich.

Bei der erfindungsgemäß aufgebauten Trägeranordnung sind verschiedene Leitungsbereiche, insbesondere ein Leitungsbereich zum Führen von Verbrennungsluft oder/und ein Leitungsbereich zum Führen des in einem Heizgerät zu erwärmenden Wärmeträgermediums, in die Trägeranordnung integriert. Es wird somit möglich, zunächst ein Heizgerät mit einer derartigen Trägeranordnung zu einer Baugruppe zusammenzufassen und dabei eine Anbindung des Heizgeräts an die verschiedenen an der Trägeranordnung vorgesehenen Leitungsbereiche herzustellen. Nachfolgend kann die so aufgebaute Baugruppe in ein Fahrzeug integriert bzw. mit dem Anbringungsbereich beispielsweise an einem Rahmen des Fahrzeugs montiert werden. Dabei kann die Anbringung am Fahrzeug so erfolgen, dass für das Heizgerät eine optimale Einbaulage erreicht wird, ohne darauf achten zu müssen, dass verschiedene am Heizgerät gebildete Anschlüsse noch frei zugänglich sind. Der Anschluss insbesondere an einen im Fahrzeug vorgesehenen Wärmeträgermediumkreislauf erfolgte erst nachträglich.

Die Integration einer weiteren Funktionalität in die erfindungsgemäße Trägeranordnung kann dadurch erreicht werden, dass der Verbrennungsluftleitungsbereich einen an den Verbrennungslufteinlass des Heizgerätes anzuschließenden Verbrennungsluft-Anschlussbereich und einen Schalldämpferbereich stromaufwärts des Verbrennungsluft-Anschlussbereichs umfasst.

Um trotz vergleichsweise komplexer Struktur einen einfach zu realisierenden Aufbau der Trägeranordnung erreichen zu können, kann diese wenigstens zwei miteinander zu verbindende Trägeranordnung-Module umfassen, wobei an einem ersten der Trägeranordnung-Module der Anbringungsbereich vorgesehen ist und an dem ersten Trägeranordnung-Modul oder/und einem zweiten der Trägeranordnung-Module der Tragebereich vorgesehen ist.

Für einen kostengünstigen, gleichwohl in stabiler Konfiguration zu realisierenden Aufbau wird vorgeschlagen, dass wenigstens ein Trägeranordnung-Modul wenigstens teilweise, vorzugsweise im Wesentlichen vollständig, mit Kunststoffmaterial aufgebaut ist. Da das insbesondere in einem Wärmeträgermediumkreislauf eines Fahrzeugs zirkulierende flüssige Wärmeträgermedium, also die Kühlflüssigkeit einer Brennkraftmaschine eines derartigen Fahrzeugs, Temperaturen von etwa 120° im Allgemeinen nicht überschreiten wird, besteht nicht die Gefahr einer Überhitzung des Aufbaumaterials der Trägeranordnung.

Der Verbrennungsluftzuführleitungsbereich kann beispielsweise an dem zweiten Trägeranordnung-Modul vorgesehen sein.

Um für einen einfachen Aufbau eine Verteilung der an der Trägeranordnung vorgesehenen Leitungsbereiche auf die verschiedenen Trägeranordnung-Module zu gewährleisten, wird vorgeschlagen, dass der erste Leitungsbereich oder/und der dritte Leitungsbereich oder/und der vierte Leitungsbereich oder/und der fünfte Leitungsbereich oder/und der sechste Leitungsbereich an dem ersten Trägeranordnung-Modul vorgesehen ist.

Der zweite Leitungsbereich kann wiederum an dem zweiten Trägeranordnung-Modul vorgesehen sein.

Für eine kompakte Bauweise wird vorgeschlagen, dass das erste Trägeranordnung-Modul und das zweite Trägeranordnung-Modul einen Heizgerät-Aufnahmeraum umschließen.

Wenn der Tragebereich wenigstens einen Wärmetauscherbereich-Anschlussbereich des Wärmeträgermediumleitungsbereichs oder/und einen Verbrennungsluft-Anschlussbereich des Verbrennungsluftleitungsbereichs umfasst, können diese Anschlussbereiche eine zusätzliche Funktionalität zum stabilen Tragen des Heizgeräts übernehmen. Selbstverständlich kann alternativ oder zusätzlich das Heizgerät mit der Trägeranordnung, insbesondere einem oder mehreren Trägeranordnung-Modulen, durch Befestigungsorgane, wie zum Beispiel Schrauben, Nietbolzen oder dergleichen, fest verbunden werden.

Die vorliegende Erfindung betrifft ferner eine Heizgerät-Trägeranordnung -Baugruppe für ein Fahrzeug, umfassend ein an einer erfindungsgemäß aufgebauten Trägeranordnung getragenes, vorzugsweise brennstoffbetriebenes Heizgerät.

Um die Zufuhr bzw. Abfuhr von Wärmeträgermedium zu bzw. von dem Heizgerät bzw. der Trägeranordnung gezielt steuern zu können, wird vorgeschlagen, dass ein Schaltventil mit wenigstens einem Schaltventil-Anschlussbereich des Wärmeträgermediumleitungsbereichs verbunden ist.

Dabei kann in Verbindung mit dem vorangehend beschriebenen Aufbau der Trägeranordnung vorgesehen sein, dass das Schaltventil mit dem ersten Schaltventil-Anschlussbereich, dem zweiten Schaltventil-Anschlussbereich und dem dritten Schaltventil-Anschlussbereich verbunden ist, oder/und dass das Schaltventil vermittels einer vorzugsweise flexiblen Leitungsverbindung mit dem ersten Wärmetauscherbereich-Anschlussbereich verbunden ist.

Zur Integration einer weiteren Funktionalität in die erfindungsgemäße Heizgerät-Trägeranordnung-Baugruppe wird vorgeschlagen, dass die Leitungsverbindung eine Wärmeträgermediumpumpe umfasst.

Zur Ableitung der im Verbrennungsbetrieb in einem Brennerbereich eines Heizgeräts entstehenden Abgase kann eine an einen Abgasauslass des Heizgeräts angeschlossene Abgasanlage an der Trägeranordnung getragen sein. Da derartige Abgase eine Temperatur im Bereich von mehreren 100 °C aufweisen können, ist es vorteilhaft, eine separat ausgebildete und entsprechend wärmeresistente Abgasanlage bereitzustellen und als derartige separate Baugruppe in die Heizgerät-Trägeranordnung-Baugruppe zu integrieren.

Die Erfindung betrifft ferner ein Heizsystem für ein Fahrzeug, umfassend einen Wärmeträgermediumkreislauf mit wenigstens einem Heizungswärmetauscher oder/und wenigstens einem Antriebsaggregat, vorzugsweise Brennkraftmaschine, und eine erfindungsgemäß aufgebaute Heizgerät-Trägeranordnung-Baugruppe.

Die vorliegende Erfindung wird nachfolgend mit Bezug auf die beiliegenden Figuren detailliert beschrieben. Es zeigt:
- Fig. 1: eine perspektivische Ansicht einer Heizgerät-Trägeranordnung-Baugruppe;
- Fig. 2: die Heizgerät-Trägeranordnung-Baugruppe der Fig. 1 in Blickrichtung II in Fig. 1 betrachtet;
- Fig. 3: die Heizgerät-Trägeranordnung-Baugruppe der Fig. 1 in Blickrichtung III in Fig. 1 betrachtet;
- Fig. 4: die Heizgerät-Trägeranordnung-Baugruppe der Fig. 1 in Blickrichtung IV in Fig. 1 betrachtet;
- Fig. 5: eine perspektivische Ansicht von Teilen der Heizgerät-Trägeranordnung-Baugruppe der Fig. 1;
- Fig. 6: eine weitere perspektivische Ansicht von Teilen der Heizgerät-Trägeranordnung-Baugruppe der Fig. 1;
- Fig. 7: eine Explosionsdarstellung der Heizgerät-Trägeranordnung-Baugruppe der Fig. 1 mit zwei Trägeranordnung-Modulen, einem Heizgerät und einem Schaltventil;

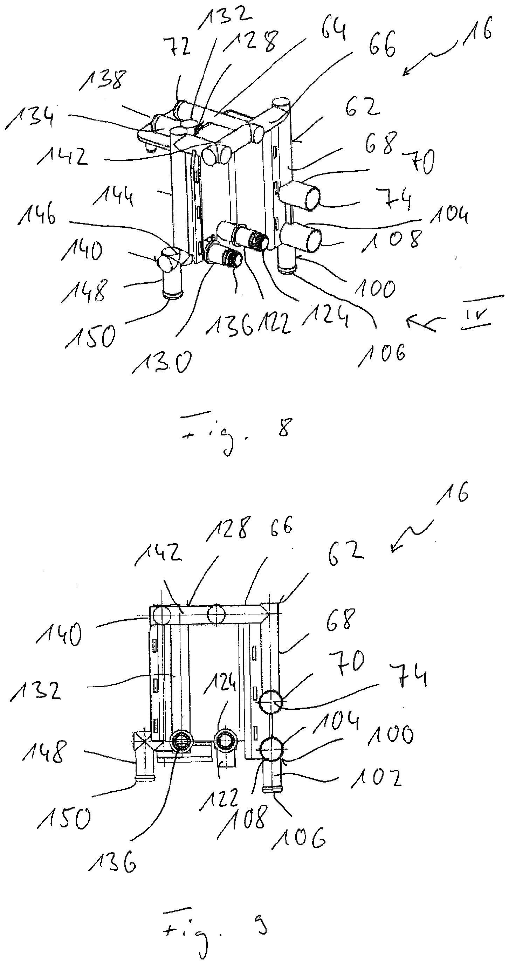

- Fig. 8: eine perspektivische Ansicht eines ersten Trägeranordnung-Moduls der Heizgerät-Trägeranordnung-Baugruppe der Fig. 1;
- Fig. 9: das Trägeranordnung-Modul der Fig. 1, betrachtet in Blickrichtung IX in Fig. 8;

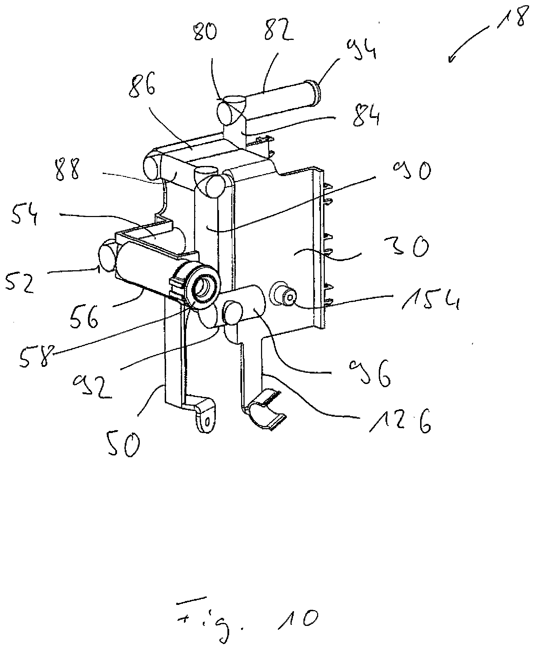

- Fig. 10: eine perspektivische Ansicht eines zweiten Trägeranordnung-Moduls der Heizgerät-Trägeranordnung-Baugruppe der Fig. 1;
- Fig. 11: in prinzipartiger Darstellung die Integration der Heizgerät-Trägeranordnung-Baugruppe der Fig. 1 in ein Heizsystem für ein Fahrzeug.

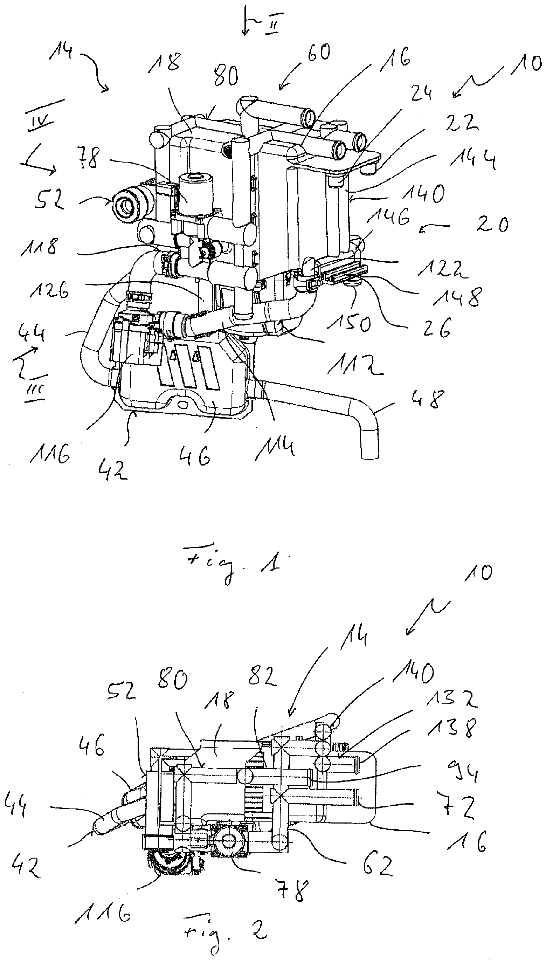

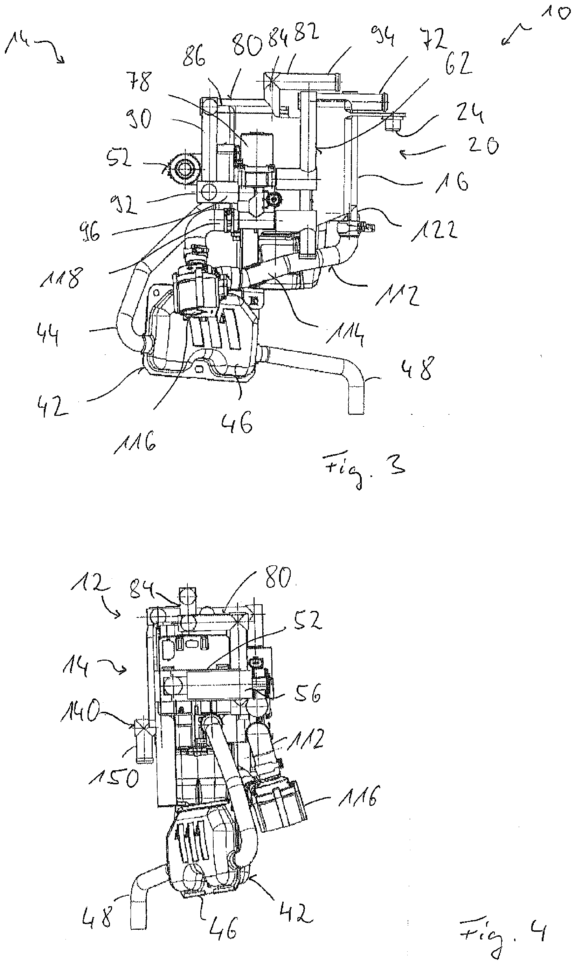

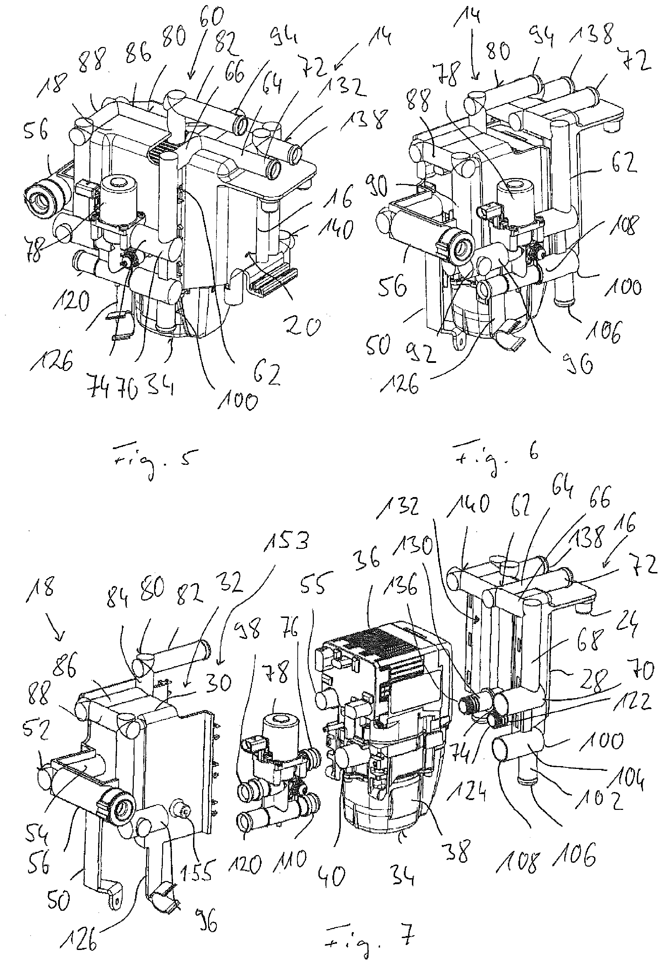

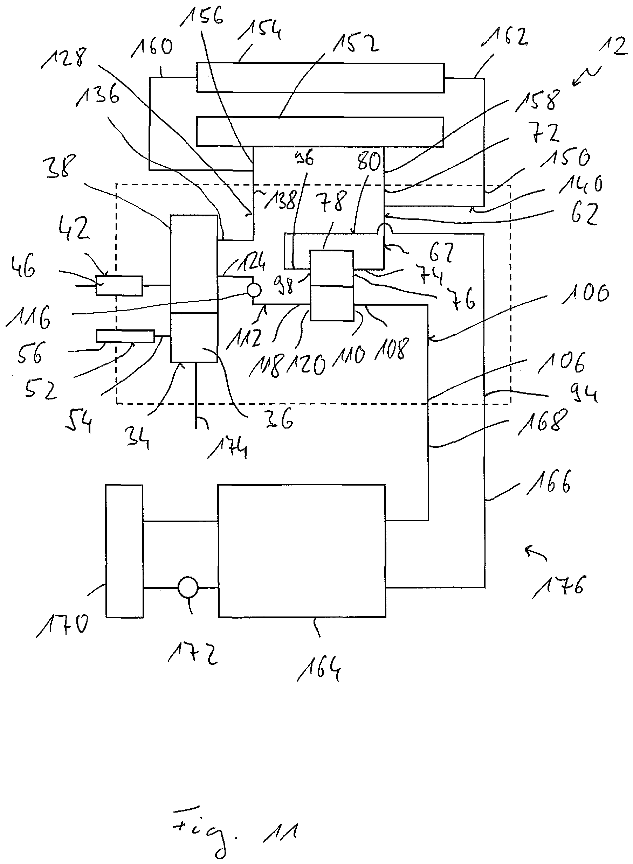

Die Fig. 1 bis 7 zeigen eine allgemein mit 10 bezeichnete Heizgerät-Trägeranordnung-Baugruppe bzw. Teile davon, welche zur Integration in ein in Fig. 11 allgemein mit 12 bezeichnetes Heizsystem für ein Fahrzeug vorgesehen ist. Die Heizgerät-Trägeranordnung-Baugruppe 10 umfasst als wesentlichen Bestandteil eine allgemein mit 14 bezeichnete Trägeranordnung welche im dargestellten Ausgestaltungsbeispiel mit zwei Trägeranordnung-Modulen 16, 18 aufgebaut ist. Die beiden Trägeranordnung-Module 16, 18 sind vorzugsweise aus Kunststoffmaterial aufgebaut und können beispielsweise jeweils einstückig in einem Gussverfahren hergestellt sein oder aus mehreren mit Kunststoffmaterial aufgebauten Teilen zusammengesetzt sein.

Das erste Trägeranordnung-Modul 16 umfasst einen allgemein mit 20 bezeichneten Anbringungsbereich, in welchem die Trägeranordnung 14 an einem Fahrzeug, beispielsweise einem Längsträger eines Fahrzeugrahmens oder einer sonstigen Fahrzeugbaugruppe, angebracht werden kann. Die Anbindung kann durch Verschraubung oder/und Verklemmung erfolgen, wobei über vorzugsweise flexible Entkopplungselemente 22, 24, 26 eine schwingungstechnische Entkopplung erreicht werden kann. Das erste Trägeranordnung-Modul 16 umfasst einen plattenartig und abgewinkelt ausgebildeten Modulkörper 28, an welchem mehrere nachfolgend noch beschriebene Abschnitte von am ersten Trägeranordnung-Modul 16 vorgesehenen Leitungsbereichen getragen bzw. vorgesehen sind.

Das zweite Trägeranordnung-Modul 18 umfasst einen beispielsweise kastenartigen Modulkörper 30, an dem ebenfalls mehrere Leitungsbereiche vorgesehen bzw. getragen sind. Der Modulkörper 30 des zweiten Trägeranordnung-Moduls 18 kann beispielsweise durch Verschraubung, Verrastung oder dergleichen mit dem Modulkörper 28 des ersten Trägeranordnung-Moduls 16 verbunden werden, so dass zwischen den beiden Modulkörpern 28, 30 bzw. zwischen den beiden Trägeranordnung-Modulen 16, 18 ein allgemein mit 32 bezeichneter Raum zur Aufnahme eines vorzugsweise mit Brennstoff betriebenen Heizgeräts 34 gebildet ist.

Das Heizgerät 34 umfasst einen in Fig. 11 auch schematisch dargestellten Brennerbereich 36, in welchen Verbrennungsluft und Brennstoff eingespeist werden, so dass bei in einer Brennkammer des Brennerbereichs 36 ablaufender Verbrennung Verbrennungsabgase entstehen, welche einen Wärmetauscherbereich 38 durchströmen. An einen allgemein mit 40 bezeichneten Abgasauslass des Heizgeräts 34 ist eine Abgasanlage 42 mit einem Rohrabschnitt 44 angeschlossen. Der Rohrabschnitt 44 führt zu einem Schalldämpfer 46, von welchem ein Auslassrohr 48 wegführt. Am zweiten Trägeranordnung-Modul 18 ist ein Befestigungsabschnitt 50 vorgesehen, an welchem die Abgasanlage 42 beispielsweise im Bereich seines Schalldämpfers 46 festgelegt werden kann.

Am zweiten Trägeranordnung-Modul 18 ist ein Verbrennungsluftleitungsbereich 52 vorgesehen. Ein Abschnitt 54 des Verbrennungsluft-Leitungsbereichs 52 ist an einen Verbrennungslufteinlass 55 eines Verbrennungsluftgebläses, beispielsweise Seitenkanalgebläse, des Heizgeräts 34 angeschlossen bzw. anzuschließen. Ein an den Abschnitt 54 anschließender Abschnitt 56 des Verbrennungsluftleitungsbereichs 52 bildet mit schalldämpfendem Material oder einem beispielsweise mäanderartig ausgebildetem Strömungsweg einen Schalldämpferbereich 58, über welchen der Verbrennungsluftleitungsbereich 52 zur Umgebung offen ist, so dass Verbrennungsluft über den Schalldämpferbereich 58 bzw. die beiden Abschnitte 56, 54 und den Verbrennungslufteinlass 55 in den Brennerbereich 36 des Heizgeräts 38 strömen kann.

Die Trägeranordnung 14 bzw. die Trägeranordnung-Module 16, 18 derselben weisen ferner einen allgemein mit 60 bezeichneten Wärmeträgermediumleitungsbereich auf. Dieser ist, wie im Folgenden dargelegt, auf die beiden Trägeranordnung-Module 16, 18 aufgeteilt. So ist beispielsweise am ersten Trägeranordnung-Modul 16 ein allgemein mit 62 bezeichneter erster Leitungsbereich des Wärmeträgermediumleitungsbereichs 60 vorgesehen. Dieser erste Leitungsbereich 62 umfasst Abschnitte 64, 66, 68, 70. Der Abschnitt 64 bildet einen ersten Wärmeträgermediumkreislauf-Anschlussbereich 72. Der Abschnitt 70 bildet einen ersten Schaltventil-Anschlussbereich 74. Mit diesem kann der erste Leitungsbereich 62 an einen ersten Anschluss 76 eines allgemein mit 78 bezeichneten Schaltventils angeschlossen werden. Beispielsweise kann das Schaltventil 78 mit seinem ersten Anschluss 76 in den ersten Schaltventil-Anschlussbereich 74 eingeschoben und darin fluiddicht aufgenommen werden.

Am zweiten Trägeranordnung-Modul 18 ist ein allgemein mit 80 bezeichneter zweiter Leitungsbereich des Wärmeträgermediumleitungsbereichs 60 vorgesehen. Der zweite Leitungsbereich 80 umfasst Abschnitte 82, 84, 86, 88, 90, 92. Der Abschnitt 82 bildet einen zweiten Wärmeträgermediumkreislauf-Anschlussbereich 94. Der Abschnitt 92 bildet einen zweiten Schaltventil-Anschlussbereich 96, an welchen ein zweiter Anschluss 98 des Schaltventils 78 beispielsweise durch Einstecken fluiddicht angeschlossen werden kann.

Am ersten Trägeranordnung-Modul 16 ist ferner ein dritter Leitungsbereich 100 des Wärmeträgermediumleitungsbereichs 60 vorgesehen. Der dritte Leitungsbereich 100 umfasst Abschnitte 102, 104. Der Abschnitt 102 bildet einen dritten Wärmeträgermediumkreislauf-Anschlussbereich 106. Der Abschnitt 104 bildet einen dritten Schaltventil-Anschlussbereich 108, an welchen ein dritter Anschluss 110 des Schaltventils 78 beispielsweise durch Einstecken fluiddicht angeschlossen werden kann.

Ein vierter Leitungsbereich 112 des Wärmeträgermediumleitungsbereichs 60 umfasst eine vorzugsweise flexible Rohrleitung 114, in welche eine Wärmeträgermediumpumpe 116 integriert ist. Die flexible Rohrleitung 114 bildet einen vierten Schaltventil-Anschlussbereich 118, welcher beispielsweise durch Aufstecken auf einen vierten Anschluss 120 des Schaltventils 78 fluiddicht damit verbunden werden kann. Hier kann eine Rohrschelle oder dergleichen eingesetzt werden, um eine stabile Anbindung zu erreichen. Die flexible Rohrleitung 114 ist ferner an einen am ersten Trägeranordnung-Modul 16 ausgebildeten Abschnitt 122 angebunden, welcher einen ersten Wärmetauscherbereich-Anschlussbereich 124 bereitstellt, über welchen eine Anbindung an den Wärmetauscherbereich 38 des Heizgeräts 34 hergestellt wird. Beispielsweise kann der erste Wärmetauscherbereich-Anschlussbereich 122 fluiddicht in einen entsprechenden Stutzten des Wärmetauscherbereichs 38 eingesetzt werden. Ebenso wie bei den verschiedenen Anschlüssen 76, 98, 110, 120 des Schaltventils 78 kann die fluiddichte Anbindung beispielsweise durch die Zwischenlagerung eines O-ringartigen Dichtungselements oder mehrerer derartiger Dichtungselemente erfolgen. Zur stabilen Halterung der flexiblen Rohrleitung 114 ist am zweiten Trägeranordnung-Modul 18 ferner ein Haltebereich 126 vorgesehen, in welchen die flexible Rohrleitung 114 eingeklemmt werden kann.

Am ersten Trägeranordnung-Modul 16 ist ferner ein fünfter Leitungsbereich 128 des Wärmeträgermediumleitungsbereichs 60 vorgesehen. Dieser umfasst Abschnitte 130,132, 134. Der Abschnitt 130 bildet einen zweiten Wärmetauscherbereich-Anschlussbereich 136, welcher fluiddicht in einen entsprechenden Stutzen des Wärmetauscherbereichs 38 eingesetzt werden kann. Der Abschnitt 134 bildet einen vierten Wärmeträgermediumkreislauf-Anschlussbereich 138.

Am ersten Trägeranordnung-Modul 16 ist ferner ein allgemein mit 140 bezeichneter sechster Leitungsbereich des Wärmeträgermediumleitungsbereichs 60 vorgesehen. Dieser zweigt beispielsweise vom Abschnitt 64 des ersten Leitungsbereichs 62 ab und umfasst Abschnitte 142, 144, 146, 148. Der Abschnitt 148 bildet einen fünften Wärmeträgermedium-Anschlussbereich 150.

Im Zusammenbauzustand der Heizgerät-Trägeranordnung-Baugruppe 10 ist das Heizgerät 34 zwischen den beiden Trägeranordnung-Modulen 16, 18 der Trägeranordnung 14 aufgenommen und daran gehalten. Dabei kann beispielsweise das Heizgerät 34 an zumindest eines der beiden Trägeranordnung-Module 16, 18 durch Verschraubung oder/und Verrastung oder in sonstiger Weise angebunden sein. Alternativ oder zusätzlich wird durch die Verbindung der verschiedenen Einlässe und Auslässe des Heizgeräts 34 mit jeweiligen Anschlussbereichen der verschiedenen Leitungsbereiche eine das Heizgerät 34 stabil zwischen den beiden Trägeranordnung-Modulen 16, 18 haltende Tragewechselwirkung erreicht. Dies bedeutet, dass bereits durch diese verschiedenen oder einige der mit dem Heizgerät 34 in Verbindung zu bringenden Anschlussbereiche ein allgemein mit 153 bezeichneter Tragebereich für das Heizgerät 34 bereitgestellt wird. Dieser kann, alternativ oder zusätzlich auch eine feste Anbindung durch Verschraubung, Verrastung oder in sonstiger Weise an zumindest eines der Trägeranordnung-Module 16, 18 umfassen. Das Schaltventil 78 wiederum kann beispielsweise an einen Verbindungsbereich 155 am zweiten Trägeranordnung-Modul 18 beispielsweise durch Verschraubung oder/und Verrastung oder dergleichen angebunden werden.

Nachfolgend wird mit Bezug auf die Fig. 11 die Integration dieser in Fig. 11 mit Strichlinie umrissenen Heizgerät-Trägeranordnung-Baugruppe 10 in das Heizsystem 12 bzw. einen Kühlmittelkreislauf 176 erläutert.

Das Heizsystem 12 umfasst als wesentliche Bestandteile zwei Heizungswärmetauscher 152, 154. Diese können an verschiedenen Positionen in einem Fahrzeug untergebracht sein. Eine zu dem Heizungswärmetauscher 152 führende Leitung 156 ist an den vierten Wärmeträgermediumkreislauf-Anschlussbereich 138 des fünften Leitungsbereichs 128 angeschlossen. Eine von dem Heizungswärmetauscher 152 weg führende Leitung 158 ist an den ersten Wärmeträgermediumkreislauf-Anschlussbereich 72 des ersten Leitungsbereichs 62 angeschlossen. Von der Leitung 156 zweigt außerhalb der Heizgerät-Trägeranordnung-Baugruppe 10 eine zum Heizungswärmetauscher 154 führende Leitung 160 ab. Eine von diesem Heizungswärmetauscher 154 weg führende Leitung 162 ist an den fünften Wärmeträgermediumkreislauf-Anschlussbereich 150 des sechsten Leitungsbereichs 140 angeschlossen. Die beiden Heizungswärmetauscher 152, 154 sind somit zueinander im Wesentlichen parallel geschaltet und werden parallel von dem aus dem Wärmetauscherbereich 38 des Heizgeräts 34 abgegebenen Wärmeträgermedium, also im Allgemeinen einer Flüssigkeit, durchströmt.

Der zweite Wärmeträgermediumkreislauf-Anschlussbereich 94 des zweiten Leitungsbereichs 80 ist in Verbindung mit einer zu einem Wassermantel eines Antriebsaggregats 164, beispielsweise Brennkraftmaschine, führenden Leitung 166. Eine von dem Antriebsaggregat 164 weg führende Leitung 168 ist an den dritten Wärmeträgermediumkreislauf-Anschlussbereich 106 des dritten Leitungsbereichs 100 angeschlossen.

Dem Antriebsaggregat 164 kann ferner ein Kühler-Wärmetauscher 170 zugeordnet sein. Dieser kann beispielsweise durch ein Thermostatventil 172 gesteuert zu- bzw. abgeschaltet werden, um bei Bedarf Wärme über diesen Kühler-Wärmetauscher 170 nach außen abgeben zu können.

Man erkennt in Fig. 11 ferner in prinzipartiger Darstellung eine Brennstoffzuführleitung 174, die beispielsweise flüssigen Brennstoff in den Brennerbereich 36 des Heizgeräts 34 einspeist. Ferner ist das Heizgerät 34 selbstverständlich über verschiedene dieses elektrisch kontaktierende Leitungen beispielsweise an ein Bordnetz eines Fahrzeugs angeschlossen, um das Heizgerät 34 mit elektrischer Energie und ggf. für dessen Betrieb relevanten Informationen zu versorgen.

Im Betrieb des in Fig. 11 dargestellten Heizsystems 12 kann das Schaltventil 78 einerseits so gestellt werden, dass eine Leitungsverbindung zwischen dem ersten Anschluss 76 und dem zweiten Anschluss 98 und eine Leitungsverbindung zwischen dem dritten Anschluss 110 und dem vierten Anschluss 120 besteht. Das durch die Wärmeträgermediumpumpe 116 geförderte Wärmeträgermedium strömt dann beispielsweise über die Leitung 168, vom Antriebsaggregat 164 kommend, durch das Schaltventil 78 und den Wärmetauscherbereich 38 zu den beiden Heizungswärmetauschern 152, 154. Das von diesen zurückströmende Wärmeträgermedium gelangt über die Wärmeträgermediumkreislauf-Anschlussbereiche 72, 150 in den ersten Leitungsbereich 62 und durch das Schaltventil 78 hindurch in den zweiten Leitungsbereich und zur Leitung 166, durch welche das Wärmeträgermedium wieder zum Antriebsaggregat 164 zurückströmt. Somit kann einerseits in dem Heizgerät 34 generierte Wärme über die beiden Heizungswärmetauscher 152, 154 auf die beispielsweise in einen Fahrzeuginnenraum einzuleitende Luft übertragen werden. Ferner kann im Wärmeträgermedium transportierte Wärme auf das Antriebsaggregat 164 übertragen werden, um dieses beispielsweise vor Inbetriebnahme vorzuwärmen. Ferner kann in diesem Schaltzustand des Schaltventils 78 bei deaktiviertem Heizgerät 34 das im Heizgerät 34 nicht zusätzlich erwärmte Wärmeträgermedium gleichwohl das Antriebsaggregat 164 und die beiden Heizungswärmetauscher 152, 154 durchströmen, um im Antriebsaggregat 164 bereitgestellte Wärme z.B. auf die in einen Fahrzeuginnenraum einzuleitende Luft zu übertragen.

In einem zweiten Schaltzustand des Schaltventils 78 kann dieses eine Verbindung zwischen dem ersten Anschluss 76 und dem vierten Anschluss 120 sowie eine Verbindung zwischen dem dritten Anschluss 110 und dem zweiten Anschluss 98 herstellen. In diesem Zustand ist das Antriebsaggregat 164 von dem Heizgerät 34 und auch den beiden Heizungswärmetauschern 152, 154 abgekoppelt. Das Heizgerät 34 wiederum ist ausschließlich in Verbindung mit den beiden Heizungswärmetauschern 152, 154. In diesem Zustand wird durch das Heizgerät 34 generierte Wärme also lediglich im Bereich der Heizungswärmetauscher 152, 154 beispielsweise auf die in einen Fahrzeuginnenraum einzuleitende Luft übertragen. Das Antriebsaggregat 164 steht nicht in thermischer Wechselwirkung mit dem Heizgerät 34. Dieser Zustand kann gewählt werden, wenn beispielsweise der Vorwärmung des Fahrzeuginnenraums Vorrang gegeben werden soll.

Abschließend ist darauf hinzuweisen, dass selbstverständlich insbesondere an dem in Fig. 11 dargestellten Heizsystem verschiedenste Modifikationen vorgenommen werden können. So kann beispielsweise nur ein einziger Heizungswärmetauscher vorgesehen sein, oder es können mehr als zwei Heizungswärmetauscher vorgesehen sein. Ähnlich wie beim sechste Leitungsbereich, kann in Zuordnung zum dritten Leitungsbereich ein siebter Leitungsbereich vorgesehen sein, um die Abzweigung zum zweiten Heizungswärmetauscher bereits innerhalb der Heizgerät-Trägeranordnung-Baugruppe vorzusehen.

Mit dem erfindungsgemäßen Aufbau einer Trägeranordnung bzw. einer diese umfassenden Heizgerät-Trägeranordnung-Baugruppe wird eine einfache, gleichwohl stabile Integration eines Heizgeräts in ein Fahrzeug ermöglicht, wobei aufgrund des Bereitstellens verschiedener Leitungsbereiche an der Trägeranordnung auch für eine einfache Anschließbarkeit einer so aufgebauten Baugruppe insbesondere an den Wärmeträgermediumkreislauf eines Fahrzeugs realisiert werden kann. Auf eine Vormontage von Schlauchverbindungen kann somit verzichtet werden. Insbesondere die verschiedenen Wärmeträgermediumkreislauf-Anschlüsse können beispielsweise als so genannte Quick-Connector-Anschlüsse ausgeführt sein, welche ein einfaches Ankoppeln der verschiedenen Leitungen des Wärmeträgermediumkreislaufs an die Heizgerät-Trägeranordnung-Baugruppe ermöglichen. Durch den Einsatz von Kunststoffmaterial als wesentliches Aufbaumaterial wird eine stabile, gleichwohl leichtbauende Ausgestaltung erreichbar. Eine thermische Überlastung wird vermieden, da das in den verschiedenen Leitungsbereichen zu führende Wärmeträgermedium eine Temperatur von etwa 120°C im Allgemeinen nicht überschreiten wird und da die Verbrennungsabgase über eine separat ausgebildete Abgasanlage aus der Baugruppe abgeführt werden.

## Patentansprüche

1. Trägeranordnung (14) zur Anbringung eines vorzugsweise brennstoffbetriebenen
Heizgerätes (34) an einem Fahrzeug, umfassend einen Anbringungsbereich (20) zur Anbringung der Trägeranordnung (14) an einem Fahrzeug und einen Tragebereich (153) zur Anbringung eines Heizgerätes (34) an der Trägeranordnung (14), ferner umfassend:
- einen Verbrennungsluftleitungsbereich (52) zum Leiten von Verbrennungsluft zu einem Verbrennungslufteinlass (55) eines Heizgerätes (34),
und
- einen Wärmeträgermediumleitungsbereich (60) zum Leiten von in einem Wärmeträgermediumkreislauf (176) eines Fahrzeugs strömendem Wärmeträgermedium durch die Trägeranordnung (14) hindurch und zu oder von einem Wärmetauscherbereich (38) des Fahrzeugheizgeräts (34),
wobei der Wärmeträgermediumleitungsbereich (60) umfasst:
- einen ersten Leitungsbereich (62) mit einem an den Wärmeträgermediumkreislauf (176) anzuschließenden ersten Wärmeträgermediumkreislauf-Anschlussbereich (72) und einem an ein Schaltventil (78) anzuschließenden ersten Schaltventil-Anschlussbereich (74),
und
- einen zweiten Leitungsbereich (80) mit einem an den Wärmeträgermediumkreislauf (176) anzuschließenden zweiten Wärmeträgermediumkreislauf-Anschlussbereich (94) und einem an das Schaltventil (78) anzuschließenden zweiten Schaltventil-Anschlussbereich (96),
und
- einen dritten Leitungsbereich (100) mit einem an den Wärmeträgermediumkreislauf (176) anzuschließenden dritten Wärmeträgermediumkreislauf-Anschlussbereich (106) und einem an das Schaltventil (78) anzuschließenden dritten Schaltventil-Anschlussbereich (108),
und
- einen vierten Leitungsbereich (112) mit einem an den Wärmetauscherbereich (38) anzuschließenden ersten Wärmetauscherbereich-Anschlussbereich (124) und einem an das Schaltventil (78) anzuschließenden vierten Schaltventil-Anschlussbereich (118),
und
- einen fünften Leitungsbereich (128) mit einem an den Wärmetauscherbereich (38) anzuschließenden zweiten Wärmetauscherbereich-Anschlussbereich (136) und einem an den Wärmeträgermediumkreislauf (12) anzuschließenden vierten Wärmeträgermediumkreislauf-Anschlussbereich (138).

2. Trägeranordnung nach Anspruch 1, wobei der Verbrennungsluftleitungsbereich (52) einen an den Verbrennungslufteinlass (55) des Heizgerätes (34) anzuschließenden Verbrennungsluft-Anschlussbereich und einen Schalldämpferbereich (58) stromaufwärts des Verbrennungsluft-Anschlussbereichs umfasst.

3. Trägeranordnung nach Anspruch 1 oder 2, ferner umfassend einen mit dem ersten Leitungsbereich (62) in Verbindung stehenden sechsten Leitungsbereich (140) mit einem an den Wärmeträgermediumkreislauf (176) anzuschließenden fünften Wärmeträgermediumkreislauf-Anschlussbereich (150).

4. Trägeranordnung nach einem der vorangehenden Ansprüche, ferner umfassend wenigstens zwei miteinander zu verbindende Trägeranordnung-Module (16, 18), wobei an einem ersten der Trägeranordnung-Module (16, 18) der Anbringungsbereich (26) vorgesehen ist, und an dem ersten Trägeranordnung-Modul (16) oder/und einem zweiten der Trägeranordnung-Module (16, 18) der Tragebereich (153) vorgesehen ist.

5. Trägeranordnung nach Anspruch 4, wobei wenigstens ein Trägeranordnung-Modul (16, 18) wenigstens teilweise, vorzugsweise im Wesentlichen vollständig, mit Kunststoffmaterial aufgebaut ist.

6. Trägeranordnung nach Anspruch 4 oder 5, wobei der Verbrennungsluftzuführleitungsbereich (52) an dem zweiten Trägeranordnung-Modul (18) vorgesehen ist.

7. Trägeranordnung nach Anspruch 4, 5 oder 6, wobei der erste Leitungsbereich (62) oder/und der dritte Leitungsbereich (100) oder/und der vierte Leitungsbereich (112) oder/und der fünfte Leitungsbereich (128) oder/und der sechste Leitungsbereich (140) an dem ersten Trägeranordnung-Modul (16) vorgesehen ist.

8. Trägeranordnung nach einem der Ansprüche 4-7, wobei der zweite Leitungsbereich (80) an dem zweiten Trägeranordnung-Modul (18) vorgesehen ist.

9. Trägeranordnung nach einem der Ansprüche 4-8, wobei das erste Trägeranordnung-Modul (16) und das zweite Trägeranordnung-Modul (18) einen Heizgerät-Aufnahmeraum (32) umschließen.

10. Trägeranordnung nach einem der vorangehenden wobei der Tragebereich (153) wenigstens einen Wärmetauscherbereich-Anschlussbereich (124, 136) des Wärmeträgermediumleitungsbereichs (60) oder/und einen Verbrennungsluft-Anschlussbereich des Verbrennungsluftleitungsbereichs (52) umfasst.

11. Heizgerät-Trägeranordnung-Baugruppe für ein Fahrzeug, umfassend ein an einer Trägeranordnung (14) nach einem der vorangehenden Ansprüche getragenes, vorzugsweise brennstoffbetriebenes Heizgerät (34).

12. Heizgerät-Trägeranordnung-Baugruppe nach Anspruch 11, wobei ein Schaltventil (78) mit wenigstens einem Schaltventil-Anschlussbereich (74, 92, 108, 118) des Wärmeträgermediumleitungsbereichs (60) verbunden ist.

13. Heizgerät-Trägeranordnung-Baugruppe nach Anspruch 12, wobei das Schaltventil (78) mit dem ersten Schaltventil-Anschlussbereich (74), dem zweiten Schaltventil-Anschlussbereich (92) und dem dritten Schaltventil-Anschlussbereich (108) verbunden ist, oder/und dass das Schaltventil (78) vermittels einer vorzugsweise flexiblen Leitungsverbindung (114) mit dem ersten Wärmetauscherbereich-Anschlussbereich (124) verbunden ist.

14. Heizgerät-Trägeranordnung-Baugruppe nach Anspruch 13, wobei die Leitungsverbindung (114) eine Wärmeträgermediumpumpe (116) umfasst.

15. Heizgerät-Trägeranordnung-Baugruppe nach einem der Ansprüche 11-14, wobei eine an einen Abgasauslass (40) des Heizgeräts (34) angeschlossene Abgasanlage (42) an der Trägeranordnung (14) getragen ist.

16. Heizsystem für ein Fahrzeug, umfassend einen Wärmeträgermediumkreislauf (176) mit wenigstens einem Heizungswärmetauscher (152, 154) oder/und wenigstens einem Antriebsaggregat (164), vorzugsweise Brennkraftmaschine, und eine Heizgerät-Trägeranordnung-Baugruppe (10) nach einem der Ansprüche 11-14.

## Claims

1. Carrier arrangement for mounting a preferably fuel-operated heating device (34) on a vehicle, comprising a mounting area (20) for mounting the carrier arrangement (14) on a vehicle and a carrying area (153) for mounting a heating device (34) on the carrier arrangement (14), further comprising:
- a combustion air line area (52) for guiding combustion air to a combustion air inlet (55) of a heating device (34),
and
- a heat transfer medium line area (60) for guiding heat transfer medium flowing in a heat transfer medium circuit (176) of a vehicle through the carrier arrangement (14) and to or from a heat exchanger area (38) of the vehicle heating device (34),
wherein the heat transfer medium line area (60) comprises:
- a first line area (62) with a first heat transfer medium circuit connection area (72) to be connected to the heat transfer medium circuit (176) and with a first switching valve connection area (74) to be connected to a switching valve (78),
and
- a second line area (80) with a second heat transfer medium circuit connection area (94) to be connected to the heat transfer medium circuit (176) and with a second switching valve connection area (96) to be connected to the switching valve (78),
and
- a third line area (100) with a third heat transfer medium circuit connection area (106) to be connected to the heat transfer medium circuit (176) and with a third switching valve connection area (108) to be connected to the switching valve (78),
and
- a fourth line area (112) with a first heat exchanger area (124) to be connected to the heat exchanger area (38) and with a fourth switching valve connection area (118) to be connected to the switching valve (78),
and
- a fifth line area (128) with a second heat exchanger area connection area (136) to be connected to the heat exchanger area (38) and with a fourth heat transfer medium circuit connection area (138) to be connected to the heat transfer medium circuit (12).

2. Carrier arrangement in accordance with claim 1, wherein the combustion air line area (52) comprises a combustion air connection area to be connected to the combustion air inlet (55) of the heating device (34) and a muffler area (58) upstream of the combustion air connection area.

3. Carrier arrangement in accordance with claim 1 or 2, further comprising a sixth line area (140) that is in connection with the first line area (62) with a fifth heat transfer medium circuit connection area (150) to be connected to the heat transfer medium circuit (176).

4. Carrier arrangement in accordance with one of the preceding claims, further comprising at least two carrier arrangement modules (16, 18) to be connected to one another, wherein the mounting area (26) is provided on a first of the carrier arrangement modules (16, 18) and the carrying area (153) is provided on the first carrier arrangement module (16) or/and on a second of the carrier arrangement modules (16, 18).

5. Carrier arrangement in accordance with claim 4, wherein at least one carrier arrangement module (16, 18) is made at least partially and preferably essentially entirely of a plastic material.

6. Carrier arrangement in accordance with claim 4 or 5, wherein the combustion air feed line area (52) is provided at the second carrier arrangement module (18).

7. Carrier arrangement in accordance with claim 4, 5 or 6, wherein the first line area (62) or/and the third line area (100) or/and the fourth line area (112) or/and the fifth line area (128) or/and the sixth line area (140) is provided at the first carrier arrangement module (16).

8. Carrier arrangement in accordance with one of claims 4-7, wherein the second line area (80) is provided at the second carrier arrangement module (18).

9. Carrier arrangement in accordance with one of the claims 4-8, wherein the first carrier arrangement module (16) and the second carrier arrangement module (18) enclose a heating device receiving space (32).

10. Carrier arrangement in accordance with one of the preceding claims, wherein the carrying area (153) comprises at least one heat exchanger area connection area (124, 136) of the heat transfer medium line area (60) or/and a combustion air connection area of the combustion air line area (52).

11. Heating device carrier arrangement unit for a vehicle, comprising a preferably fuel-operated heating device (34) carried on a carrier arrangement (14) in accordance with one of the preceding claims.

12. Heating device carrier arrangement unit in accordance with claim 11, wherein a switching valve (78) is connected to at least one switching valve connection element (74, 92, 108, 118) of the heat transfer medium line area (60).

13. Heating device carrier arrangement unit in accordance with claim 12, wherein the switching valve (78) is connected to the first switching valve connection area (74), to the second switching valve connection area (92) and to the third switching valve connection area (108), or/and that the switching valve (78) is connected to the first heat exchanger area connection area (124) by means of a preferably flexible line connection (114).

14. Heating device carrier arrangement unit in accordance with claim 13, wherein the line connection (114) comprises a heat transfer medium pump (116).

15. Heating device carrier arrangement unit in accordance with one of the claims 11-14, wherein an exhaust system (42) connected to an exhaust gas outlet (40) of the heating device (34) is carried on the carrier arrangement (14).

16. Heating system for a vehicle, comprising a heat transfer medium circuit (176) with at least one heating heat exchanger (152, 154) or/and with at least one drive unit (164), preferably an internal combustion engine, and a heating device carrier arrangement unit (10) in accordance with one of the claims 11-14.

## Revendications

1. Agencement de support pour le montage d'un appareil de chauffage (34), de préférence à combustible, sur un véhicule, comprenant une zone de montage (20) pour le montage de l'agencement de support (14) sur un véhicule et une zone de support (153) pour le montage d'un appareil de chauffage (34) sur l'agencement de support (14), comprenant en outre :
- une zone de conduite d'air de combustion (52) pour guider l'air de combustion vers une entrée d'air de combustion (55) d'un appareil de chauffage (34),
et
- une zone de conduite de médium caloporteur (60) pour guider le médium caloporteur circulant dans un circuit de médium caloporteur (176) d'un véhicule à travers l'agencement de support (14) et vers ou depuis une zone d'échangeur de chaleur (38) de l'appareil de chauffage de véhicule (34),
dans lequel la zone de conduite de médium caloporteur (60) comprend :
- une première zone de conduite (62) avec une première zone de raccordement de circuit de médium caloporteur (72) à raccorder au circuit de médium caloporteur (176) et avec une première zone de raccordement de vanne de commutation (74) à raccorder à la vanne de commutation (78),
et
- une deuxième zone de conduite (80) avec une deuxième zone de raccordement de circuit de médium caloporteur (94) à raccorder au circuit de médium caloporteur (176) et avec une deuxième zone de raccordement de vanne de commutation (96) à raccorder à la vanne de commutation (78),
et
- une troisième zone de conduite (100) avec une troisième zone de raccordement de circuit de médium caloporteur (106) à raccorder au circuit de médium caloporteur (176) et avec une troisième zone de raccordement de vanne de commutation (108) à raccorder à la vanne de commutation (78),
et
- une quatrième zone de conduite (112) avec une première zone de raccordement d'échangeur de chaleur (124) à raccorder à la zone d'échangeur de chaleur (38) et avec une quatrième zone de raccordement de vanne de commutation (118) à raccorder à la vanne de commutation (78),
et
- une cinquième zone de conduite (128) avec une deuxième zone de raccordement de zone d'échangeur de chaleur (136) à raccorder à la zone d'échangeur de chaleur (38) et avec une quatrième zone de raccordement de circuit de médium caloporteur (138) à raccorder au circuit de médium caloporteur (12).

2. Agencement de support selon la revendication 1, dans lequel la zone de conduite d'air de combustion (52) comprend une zone de raccordement d'air de combustion à raccorder à l'entrée d'air de combustion (55) de l'appareil de chauffage (34) et une zone de silencieux (58) en amont de la zone de raccordement d'air de combustion.

3. Agencement de support selon la revendication 1 ou 2, comprenant en outre une sixième zone de conduite (140) qui est en relation avec la première zone de conduite (62) avec une cinquième zone de raccordement de circuit de médium caloporteur (150) à relier au circuit de médium caloporteur (176).

4. Agencement de support selon l'une des revendications précédentes, comprenant au moins deux modules d'agencement de support (16, 18) à relier entre eux, la zone de montage (26) étant prévue sur un premier des modules d'agencement de support (16, 18) et la zone de support (153) étant prévue sur le premier module d'agencement de support (16) et/ou sur un deuxième des modules d'agencement de support (16, 18).

5. Agencement de support selon la revendication 4, dans lequel au moins un module d'agencement de support (16, 18) est réalisé au moins partiellement et de préférence essentiellement entièrement en matière plastique.

6. Agencement de support selon la revendication 4 ou 5, dans lequel la zone de conduite d'alimentation en air de combustion (52) est prévue au niveau du deuxième module d'agencement de support (18).

7. Agencement de support selon la revendication 4, 5 ou 6, dans lequel la première zone de conduite (62) ou/et la troisième zone de conduite (100) ou/et la quatrième zone de conduite (112) ou/et la cinquième zone de conduite (128) ou/et la sixième zone de conduite (140) est prévue au niveau du premier module d'agencement de support (16).

8. Agencement de support selon l'une des revendications 4 à 7, dans lequel la deuxième zone de conduite (80) est prévue au niveau du deuxième module d'agencement de support (18).

9. Agencement de support selon l'une des revendications 4 à 8, dans lequel le premier module d'agencement de support (16) et le deuxième module d'agencement de support (18) renferment un espace de réception d'un appareil de chauffage (32).

10. Agencement de support selon l'une des revendications précédentes, dans lequel la zone de support (153) comprend au moins une zone de raccordement d'échangeur de chaleur (124, 136) de la zone de conduite de médium caloporteur (60) et/ou une zone de raccordement d'air de combustion de la zone de conduite d'air de combustion (52).

11. Unité d'agencement de support d'appareil de chauffage pour un véhicule, comprenant un appareil de chauffage (34), de préférence fonctionnant au carburant, porté par un agencement de support (14) selon l'une des revendications précédentes.

12. Unité d'agencement de support d'appareil de chauffage selon la revendication 11, dans laquelle une vanne de commutation (78) est reliée à au moins une zone de raccordement de vanne de commutation (74, 92, 108, 118) de la zone de conduite de médium caloporteur (60).

13. Unité d'agencement de support d'appareil de chauffage selon la revendication 12, dans laquelle la vanne de commutation (78) est reliée à la première zone de raccordement de vanne de commutation (74), à la deuxième zone de raccordement de vanne de commutation (92) et à la troisième zone de raccordement de vanne de commutation (108), et/ou que la vanne de commutation (78) est reliée à la première zone de raccordement de zone d'échangeur de chaleur (124) au moyen d'un raccordement de conduite (114) de préférence flexible.

14. Unité d'agencement de support d'appareil de chauffage selon la revendication 13, dans laquelle le raccordement de conduite (114) comprend une pompe à médium caloporteur (116).

15. Unité d'agencement de support d'appareil de chauffage selon l'une des revendications 11 à 14, dans laquelle un système d'échappement (42) relié à une sortie de gaz d'échappement (40) de l'appareil de chauffage (34) est porté sur l'agencement de support (14).

16. Système de chauffage pour un véhicule, comprenant un circuit de médium caloporteur (176) avec au moins un échangeur de chaleur de chauffage (152, 154) et/ou avec au moins une unité d'entraînement (164), de préférence un moteur à combustion interne, et une unité d'agencement de support d'appareil de chauffage (10) selon l'une des revendications 11 à 14.
